Europäisches Patentamt

European Patent Office

Office européen des brevets

(19)

(11) Veröffentlichungsnummer : **0 143 215**
**B1**

(12) # EUROPÄISCHE PATENTSCHRIFT

(45) Veröffentlichungstag der Patentschrift :
29.07.87

(51) Int. Cl.⁴ : **B 29 C 47/88**, H 01 B 13/14

(21) Anmeldenummer : **84110485.4**

(22) Anmeldetag : **04.09.84**

(54) **Kühleinrichtung für einen extrudierten Kunststoffkörper.**

(30) Priorität : **26.11.83 DE 3342835**

(43) Veröffentlichungstag der Anmeldung :
**05.06.85 Patentblatt 85/23**

(45) Bekanntmachung des Hinweises auf die Patenterteilung : **29.07.87 Patentblatt 87/31**

(84) Benannte Vertragsstaaten :
**AT CH DE FR GB IT LI**

(56) Entgegenhaltungen :
**CH-A- 540 771**
**DE-A- 1 579 275**
**DE-A- 2 805 631**

(73) Patentinhaber : **AEG KABEL Aktiengesellschaft**
**Bonnenbroicher Strasse 2-14**
**D-4050 Mönchengladbach 2 (DE)**

(72) Erfinder : **Hagemeister, Gerd, Dipl.-Ing.**
**Flurstrasse 2**
**D-4937 Lage (DE)**

(74) Vertreter : **Langer, Karl-Heinz, Dipl.-Ing.**
**Licentia Patent-Verwaltungs-GmbH Theodor-Stern-Kai 1**
**D-6000 Frankfurt/Main 70 (DE)**

**Beschreibung**

Die Erfindung bezieht sich auf eine Anordnung der im Oberbegriff des Anspruchs 1 bezeichneten und nach der DE-A 28 05 631 bekannten Art.

Im bekannten Fall verläuft der aus den Extruder austretende langgestreckte Kunststoffkörper, nämlich ein mit einer Isolierhülle versehener Leiter, in Form einer durchhängenden Kettenlinie. Damit wird verhindert, daß die noch heiße und damit weiche Isolierhülle durch das Gewicht aufnehmende Stützen wie beispielsweise Rollen plastisch bleibend verformt wird. Die dem Extruder unmittelbar folgende Kühleinrichtung hat keine tragende Funktion. Tragkräfte greifen an den langgestreckten Körper erst dann an, wenn der extrudierte Kunststoff nach dem Verlassen der Kühleinrichtung genügend verfestigt ist.

Der Fertigungsaufwand und Raumbedarf für die Führung des langgestreckten Körpers gemäß einer durchhängenden Kettenlinie ist jedoch erheblich. Bei waagerechter Führung durch eine das Gewicht aufnehmende tragende Kühleinrichtung ist nicht zu verhindern, daß durch die tragenden Führungsrollen eine bleibende Verformung des Extrudats entsteht.

Aus der CH-A 540 771 ist eine U-förmige Kühlrinne bekannt, die waagerecht angeordnet ist und in welche Kühlwasser von oben zugeführt wird. Die Anordnung dient zur Kühlung extrudierter Kunststoffrohre die auf der Oberfläche des Kühlwassers infolge eines rein statischen Auftriebs schwimmen.

Der Erfindung liegt die Aufgabe zugrunde, die Einrichtung der eingangs genannten Art derart zu verbessern, daß die Kühlung und Führung des langgestreckten Körpers zuverlässig und störungsfrei bei im wesentlichen waagerechter Führung möglich ist und auch Vollkörper aus Kunststoff berührungsfrei, d. h. in Wasser schwebend, gekühlt werden.

Diese Aufgabe wird durch die im Anspruch 1 gekennzeichneten Merkmale gelöst. Vorteilhafte Weiterbildungen der Erfindung sind in den Unteransprüchen gekennzeichnet.

Die Erfindung und deren Vorteile werden anhand der Beschreibung eines in der Zeichnung dargestellten vorteilhaften Ausführungsbeispieles erläutert.

Figur 1 zeigt eine Aufsicht auf eine erfindungsgemäß gestaltete Kühleinrichtung, welche zwischen dem Spritzkopf eines Extruders und einer weiteren Kühleinrichtung angeordnet ist.

Figur 2 zeigt einen Querschnitt durch die in Figur 1 dargestellte Kühleinrichtung gemäß der Linie A-A.

Figur 3 zeigt einen Längsschnitt gemäß der Linie B-B nach Figur 2.

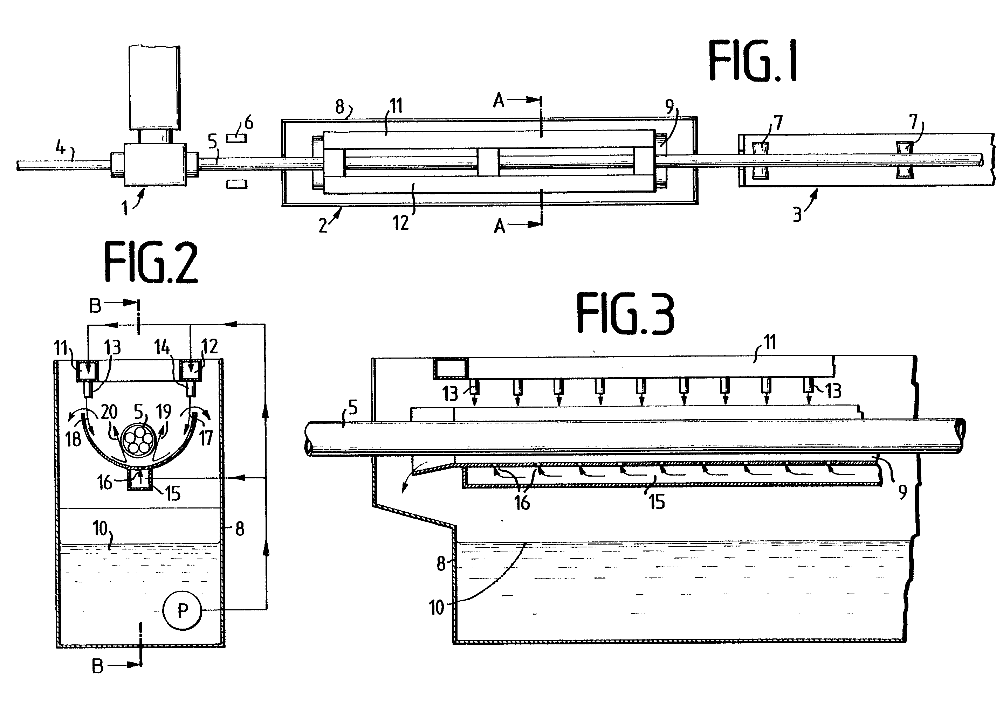

In Figur 1 ist mit 1 der Spritzkopf eines Extruders, mit 2 eine erfindungsgemäße Kühleinrichtung und mit 3 eine weitere Kühleinrichtung bezeichnet. Durch den Spritzkopf 1 wird ein aus mehreren Elementen verseilter elektrischer Leiter 4 geführt und verläßt ihn als mit einer isolierenden Kunststoffhülle umgebener Leiter 5.

Mittels der Meßeinrichtung 6 wird kontrolliert, ob die Abmessungen der Isolierhülle 5 den Sollwerten entsprechen, insbesondere, ob sie den Leiter 4 mit in Umfangsrichtung gleichmäßiger Wandstärke umgibt. Danach wird der mit der noch heißen und deshalb weichen Isolierhülle 5 versehene Leiter durch die erfindungsgemäße Kühleinrichtung 2 geführt. Nach dem Verlassen der Kühleinrichtung 2 ist die Hülle soweit verfestigt, daß sie von den das Gewicht des isolierten Leiters tragenden Führungsrollen 7 der weiteren Kühleinrichtung 3 nicht mehr verformt werden kann.

Wesentliche Bauelemente der erfindungsgemäßen Kühleinrichtung 2 sind der Wasservorratsbehälter 8, die Kühlrinne 9, welche oberhalb des Wasserspiegels 10 im Behälter 9 angeordnet ist, sowie obere Zuführungseinrichtungen 11 und 12 mit Austrittsöffnungen 13 und 14 und eine untere Zuführungseinrichtung 15 mit Austrittsöffnungen 16. Eine Pumpe P fördert das Kühlwasser aus dem Behälter 8 zu den Zuführungseinrichtungen 11, 12 und 15, von welchen das Wasser mit Druck in die Kühlrinne 9 gespült wird und schließlich in den Behälter 8 in Form eines geschlossenen Kreislaufs zurückfließt. Erforderlichenfalls kann das im Behälter befindliche Wasser zum Entzug der von dem langgestreckten Körper 5 abgeführten Wärme durch eine nicht dargestellte Kühleinrichtung rückgekühlt werden.

Der langgestreckte Körper 5 wird im wesentlichen waagerecht geführt. Sein Gewicht wird von der erfindungsgemäß gestalteten Kühleinrichtung 2 durch hydraulischen Wasserdruck getragen. Dabei entsteht keine reibende Berührung zwischen dem extrudierten Körper 5 und der Kühlrinne 9, der Körper 5 schwebt vielmehr auf dem Wasser. Insbesondere bei schweren Extrudaten, wenn beispielsweise auf einen elektrischen Leiter eine relativ dünne Isolierschicht aufgebracht wurde, ist die statische Auftriebskraft dabei nahezu vernachlässigbar. Die hydraulischen Kräfte werden vornehmlich durch dynamischen Druck erzeugt, wobei mit erhöter Geschwindigkeit aus den Austrittsöffnungen 13, 14 und 16 austretende Wasserströme zwischen der Innenwandung der Kühlrinne 9 und insbesondere der unteren Hälte der Oberfläche des Körpers 5 einen Druck ausbilden, welcher auf den Körper 5 eine resultierende, senkrecht nach oben gerichtete Kraft ausübt, welche der Gewichtskraft des Körpers 5 entgegenwirkt. Die hydraulische Hebekraft nimmt mit kleiner werdendem Abstand zur Bodenfläche der Kühlrinne 9 zu, so daß sich der Abstand selbsttätig bis zum Erreichen einer Gleichgewichtslage einstellt und stabilisiert.

Eine wichtige Voraussetzung für die stabile und praktisch schwingungsfreie Schwebeführung des Körpers 5 sind insbesondere die Merkmale, daß sich der Abstand zwischen der Oberfläche des langgestreckten Körpers 5 und der benachbarten Fläche der Kühlrinne 9 vom untersten Punkt nach beiden Seiten nach oben hin stetig erweitert und das Kühlwasser von oben mit erhöhter Geschwindigkeit in die Abstandsräume gespült wird. Die senkrecht nach oben wirkende Spülung durch die Öffnungen 16 der Zuführungseinrichtung 15 hat lediglich eine unterstützende Aufgabe und würde für sich allein wegen des sogenannten « hydrodynamischen Paradoxons » sogar zu einem Ansaugen des Körpers 5 an den Boden der Kühlrinne 9 führen. Das von oben in Richtung der Pfeile 17 und 18 strahlartig zugeführte Wasser wird im unteren Bereich der Kühlrinne 9 umgelenkt und fließt am Körper 5 entlang mit verringerter Geschwindigkeit nach oben (Pfeile 19 und 20) und läuft schließlich insbesondere im axialen Bereich zwischen jeweils zwei Austrittsöffnungen 13 über den Rand der Kühlrinne 9 in den Wasservorratsbehälter 8 zurück.

Wenn eine optimale Führung der Körper 5 erreicht werden soll, bei welcher keine Zonen erhöhter Druckeinwirkung auf den langgestreckten Körper 5 entstehen, müssen insbesondere Geschwindigkeit und Menge des aus den Öffnungen 13 oder 16 austretenden Wassers dem spezifischen Gewicht des Körpers 5 und dessen Durchmesser d im Verhältnis zum Krümmungsradius R der Kühlrinne 9 zugeordnet werden. Optimale Daten müssen durch Versuche ermittelt werden. Wichtig ist jedoch, daß die Austrittsgeschwindigkeit des Kühlwassers aus den Öffnungen 13 mindestens 1 m/s beträgt. Versuche ergaben, daß Werte der Austrittsgeschwindigkeit von 1,5 bis 2,5 m/s vorteilhaft sind.

Die an den unteren Austrittsöffnungen 16 austretende Wassermenge muß erheblich, etwa im Verhältnis 1 :5, geringer sein, als die aus den oberen Öffnungen 13 austretende Menge.

Im Ausführungsbeispiel wurde ein langgestreckter Körper 5 mit kreisrundem Querschnitt vorausgesetzt, da solche Körper vornehmlich, insbesondere in der Kabelindustrie, gefertigt werden. Für solche Körper eignen sich insbesondere Kühlrinnen in Form eines Halbkreises mit dem Radius R. Der Durchmesser d des Körpers 5 sollte nicht größer als der 1,5-fache Radius R sein. Brauchbare Verhältnisse ergeben sich im Bereich 1,5 R > d > 0,2 R.

Selbstverständlich können erfindungsgemäße Kühleinrichtungen auch für langgestreckte extrudierte Körper 5 mit anderen als kreisrundem Querschnitt, beispielsweise mit rechteckigem Querschnitt, angepaßt werden, sofern insbesondere die im Anspruch 1 angegebenen Merkmale verwirklicht werden.

### Patentansprüche

1. Kühleinrichtung für einen extrudierten langgestreckten Kunststoffkörper (5) mit insbesonderer runder Querschnittsfläche, mit einer den langgestreckten Körper aufnehmenden U-förmigen Kühlrinne (9), welche im wesentlichen waagerecht angeordnet ist und mit oberhalb der Kühlrinne angeordneten, über die Länge der Kühlrinne (9) verteilten Zuführungseinrichtungen für Kühlwasser (11, 12), dadurch gekennzeichnet, daß sich der Abstand zwischen der Oberfläche des langgestreckten Körpers (5) und der benachbarten Fläche der Kühlrinne (9) vom untersten Punkt nach beiden Seiten nach oben hin stetig erweitert, und daß den Zuführungseinrichtungen (11, 12) das Kühlwasser mit einem solchen Druck zugeführt wird, daß es mit einer Geschwindigkeit von mindestens 1m/s zwischen die Außenfläche des langgestreckten Körpers (5) und die Innenwandung der Kühlrinne (9) gespült wird.

2. Anordnung nach Anspruch 1, dadurch gekennzeichnet, daß der Boden der Rühlrinne (9) einen etwa halbkreisförmigen Querschnitt hat, wobei der Durchmesser d des langgestreckten Körpers (5) kleiner als das 1,5-fache des Radius R der Kühlrinne (9) ist.

3. Anordnung nach Anspruch 1 oder 2, dadurch gekennzeichnet, daß unterhalb der Külrinne (9) weitere Zuführungseinrichtungen (15) für Kühlwasser angeordnet sind, durch welche Kühlwasser mit erhöhter Geschwindigkeit nach oben gegen den unteren Flächenbereich des langgestreckten Körpers (5) gespült wird.

4. Anordnung nach einem der Ansprüche 1 bis 3, dadurch gekennzeichnet, daß die Zuführungseinrichtungen (11, 12, 15) in Längsrichtung beabstandete Spülöffnungen (13, 14, 16) haben.

5. Anordnung nach Anspruch 4, dadurch gekennzeichnet, daß die unteren Spülöffnungen (16) axial jeweils zwischen den oberen Spülöffnungen (13, 14) angeordnet sind.

6. Anordnung nach einem der Ansprüche 1 bis 5, dadurch gekennzeichnet, daß der langgestreckte Körper (5) ein mit Kunststoff umhüllter elektrischer Leiter (4) ist.

7. Anordnung nach einem der Ansprüche 1 bis 6, dadurch gekennzeichnet, daß die Kühleinrichtung (2) zwischen dem Spritzkopf (1) eines Extruders und einer weiteren, dem langgestreckten Körper auf Rollen (7) führenden Hauptkühleinrichtung (3) angeordnet ist.

8. Anordnung nach einem der Ansprüche 1 bis 7, dadurch gekennzeichnet, daß die Kühlrinne (9) oberhalb der Wasseroberfläche (10) eines Wasservorratsbehälters (8) angeordnet ist und daß eine Pumpe (P) vorgesehen ist, welche das Wasser im Kreislauf aus dem Vorratsbehälter (8) zu den Zuführungseinrichtungen (11, 12, 15) fördert.

### Claims

1. A cooling arrangement for an extruded elongated plastics body (5), particularly with a round crosssectional area, having a U-shaped cooling channel (9) which receives the elongated body and is arranged substantially horizontally and having feed devices (11, 12) for cooling water distributed over the length of the cooling channel (9), characterised in that the distance between the surface of the elongated body (5) and the adjacent surface of the cooling channel (9) becomes steadily wider from the lowest point upwards at both sides and that the cooling water is supplied to the feed devices (11, 12) at such a pressure that it is flushed between the outer surface of the elongated body (5) and the inner wall of the cooling channel (9) at a speed of at least 1 m/s,

2. An arrangement as claimed in Claim 1, characterised in that the bottom of the cooling channel (9) has a substantially semicircular cross-section, the diameter d of the elongated body (5) being smaller than 1.5 times the radius R of the cooling channel (9).

3. An arrangement as claimed in Claim 1 or 2, characterised in that disposed below the cooling channel (9) are further feed devices (15) for cooling water through which cooling water is flushed upwards against the lower surface region of the elongated body (5) at an elevated speed.

4. An arrangement as claimed in one of the Claims 1 to 3, characterised in that the feed devices (11, 12, 15) have flushing openings (13, 14, 16) spaced apart in the longitudinal direction.

5. An arrangement as claimed in Claim 4, characterised in that the lower flushing openings (16) are arranged axially between the upper flushing openings (13, 14) in each case.

6. An arrangement as claimed in one of the Claims 1 to 5, characterised in that the elongated body (5) is an electrical conductor (4) covered with plastics material.

7. An arrangement as claimed in one of the Claims 1 to 6, characterised in that the cooling device (2) is disposed between the extrusion head (1) of an extruder and a further main cooling device (3) which guides the elongated body on rollers (7).

8. An arrangement as claimed in one of the Claims 1 to 7, characterised in that the cooling channel (9) is disposed above the surface (10) of the water of a water reservoir (8) and that a pump (P) is provided which circulates the water from the reservoir (8) to the feed devices (11, 12, 15).

## Revendications

1. Dispositif de refroidissement pour un corps en plastique extrudé (5) de forme allongée longitudinalement, avec en particulier une section 11, comportant une goulotte de refroidissement (9) en forme de U qui reçoit le corps de forme allongée longitudinalement et qui est disposée essentiellement horizontalement et comportant des dispositifs d'arrivée de l'eau de refroidissement (11, 12) disposés au-dessus de la goulotte de refroidissement et répartis sur la longueur de la goulotte de refroidissement (9), caractérisé en ce que, en partant du point le plus bas, la distance entre la surface du corps de forme allongée longitudinalement (5) et la surface voisine de la goulotte de refroidissement (9) va continuellement en s'élargissant vers le haut des deux côtés ; et en ce que l'eau de refroidissement arrive aux dispositifs d'arrivée de l'eau (11, 12) sous une pression telle qu'elle est chassée, avec une vitesse d'au moins 1m/s, entre la surface extérieure du corps de forme allongée longitudinalement (5) et la paroi intérieure de la goulotte de refroidissement (9).

2. Dispositif selon la revendication 1, caractérisé en ce que le fond de la goulotte de refroidissement (9) a une section de forme à peu près circulaire, étant précisé que le diamètre d du corps de forme allongée longitudinalement (5) est inférieure à 1,5 fois le rayon R de la goulotte de refroidissement (9).

3. Dispositif selon la revendication 1 ou 2, caractérisé en ce qu'en dessous de la goulotte de refroidissement (9) sont disposés d'autres dispositifs (15) d'arrivée de l'eau de refroidissement par lesquels de l'eau de refroidissement est chassée, à vitesse élevée, vers le haut en direction de la zone inférieure de la surface du corps de forme allongée longitudinalement (5).

4. Dispositif selon l'une des revendications 1 à 3, caractérisé en ce que les dispositifs d'arrivée de l'eau (11, 12, 15) présentent des ouvertures de chasse (13, 14, 16) situées à une certaine distance l'une de l'autre en direction longitudinale.

5. Dispositif selon la revendication 4, caractérisé en ce que les ouvertures inférieures de chasse (16) sont disposées axialement respectivement entre les ouvertures supérieures de chasse (13, 14).

6. Dispositif selon l'une des revendications 1 à 5, caractérisé en ce que le corps de forme allongée longitudinalement (5) est un conducteur électrique (4) gainé de plastique.

7. Dispositif selon l'une des revendications 1 à 6, caractérisé en ce que le dispositif de refroidissement (2) est disposé entre la tête d'injection (1) d'une extrudeuse et un autre dispositif principal de refroidissement dans lequel le corps de forme allongée longitudinalement passe sur des rouleaux (7).

8. Dispositif selon l'une des revendications 1 à 7, caractérisé en ce que la goulotte de refroidissement (9) est disposée au-dessus de la surface de l'eau (10) d'un réservoir d'eau (8) ; et en ce qu'il est prévu une pompe (P) qui, en circuit fermé, prend l'eau dans le réservoir (8) et l'envoie dans le dispositif d'arrivée de l'eau (11, 12, 15).

FIG.1

FIG.2

FIG.3

0 143 215